# EUROPÄISCHE PATENTSCHRIFT

(11) **EP 3 395 158 B1**
(45) Veröffentlichungstag und Bekanntmachung des Hinweises auf die Patenterteilung: **28.07.2021**
(21) Anmeldenummer: 18152446.3
(22) Anmeldetag: 19.01.2018
(51) Int. Cl.: A01F 12/40, A01D 41/12, A01D 41/127

(54) **MÄHDRESCHER**
COMBINE HARVESTER
MOISSONNEUSE-BATTEUSE

(30) Priorität: 25.04.2017 DE 102017108761
(43) Veröffentlichungstag der Anmeldung: 31.10.2018
(73) Patentinhaber: CLAAS Selbstfahrende Erntemaschinen GmbH, 33428 Harsewinkel (DE)
(72) Erfinder: Heitmann, Christoph, 48231 Warendorf (DE); Baumgarten, Joachim, 48361 Beelen (DE); Vieregge, Christopher, 32694 Dörentrup (DE); Beulke, Christian, 33428 Harsewinkel (DE); Terörde, Stefan, 48231 Warendorf (DE); Bormann, Bastian, 33334 Gütersloh (DE)
(74) Vertreter: CLAAS Gruppe

(56) Entgegenhaltungen:
- EP-A1- 2 987 396
- EP-A1- 3 138 383
- EP-A1- 3 298 880
- DE-A1-102013 108 292
- DE-A1-102014 113 965

## Beschreibung

Die Erfindung betrifft einen Mähdrescher nach dem Oberbegriff des Anspruchs 1.

Häufig werden die von einem Mähdrescher während des Erntevorganges geernteten Nichtkornbestandteile, etwa zur Verbesserung der Bodenqualität, unmittelbar auf dem abgeernteten Territorium verteilt. Dabei ist wichtig, dass das Erntegut, also das Stroh, so beschaffen ist und ausgeworfen wird, dass es leicht verrottet, damit dessen Nährstoffanteile in der folgenden Vegetationsphase verfügbar sind. Die Verrottung wird von verschiedenen Faktoren beeinflusst, neben äußeren Einflüssen (u.a. Wetter) und der Bodenzusammensetzung (u.a. Mikroorganismen) insbesondere auch von der Verteilgüte. Die Verteilgüte bestimmt sich durch verschiedene Parameter des ausgeworfenen Ernteguts, beispielsweise durch die Form des Gutstrangs auf dem Boden hinter dem Mähdrescher oder die Länge der Häcksel. Ist beispielsweise das auf dem Boden verteilte Erntegut entsprechend kurzstückig und homogen über die Arbeitsbreite des Mähdreschers verteilt, wird die Verrottung begünstigt.

Aus dem Stand der Technik sind vielfältige Lösungen bekannt, die diese Anforderungen erfüllen sollen. Beispielweise offenbart die EP 0 685 151 A1 ein System, bei dem die Windverhältnisse im Bereich der Gutverteileinrichtung des Mähdreschers ermittelt werden und das Abgabeverhalten der Verteileinrichtung nach den Windverhältnissen geregelt wird. Ein solches System hat den Vorteil, dass eine seitenwindbedingte ungleichförmige Verteilung des aus dem Mähdrescher herausgeförderten Kurzstroh-Spreu-Gemisches vermieden, zumindest jedoch reduziert wird.

Aus der EP 3 138 383 A1 ist ein System gemäß dem Oberbegriff des Anspruches 1 bekannt.

Aus der EP 1 790 207 A1 ist ein System bekannt, bei dem die Verteilung des im rückwärtigen Bereich aus dem Mähdrescher austretenden Häckselgutstroms in Abhängigkeit von der Lage der Bestandskante geregelt wird. Ein derartiges System stellt sicher, dass der auf dem Boden zu verteilende Restmaterialanteil nicht in einen noch zu erntenden Bestand abgegeben wird, da dies den Nacht eil hätte, dass bereits ausgedroschenes Erntegut ein weiteres Mal von einem Mähdrescher aufgenommen werden würde.

In der EP 1 514 466 A1 ist ferner ein Mähdrescher mit Häckselvorrichtung und Gutverteileinrichtung offenbart, der in seinem rückwärtigen Bereich eine Infrarotkamera aufnimmt, die die Verteilgüte des auf dem Boden abgelegten Kurzstroh-Spreu-Gemisches anhand der detektierten Temperaturverteilung ermittelt, wobei höhere Temperaturen ein Indikator für eine größere Schichthöhe sind. Basierend auf der ermittelten Temperaturänderung werden kinematische Parameter der Häckselvorrichtung und Gutverteileinrichtung in der Weise angepasst, dass sich eine annährend gleiche Temperaturverteilung über der Verteilbreite einstellt, was letztlich einen Indikator für eine homogene Gutverteilung und somit hohe Verteilgüte bildet.

Schließlich sei beispielhaft noch auf die DE 10 2014 113 965 A1 und die EP 3 298 880 A1 (Stand der Technik nach Artikel 54 (3) EPÜ) verwiesen, wonach die Verteilung des aus dem Mähdrescher austretenden Häckselgutstroms in Abhängigkeit von einer auswählbaren Verteilstrategie und ggf. untergeordneten Teilstrategie erfolgt
Ein Nachteil der vorangehend beschriebenen Systeme zur Beeinflussung der Verteilgüte ist, dass diese relativ aufwendige Zusatzeinrichtungen benötigen, die auch einen entsprechend hohen Energiebedarf haben.

Der vorliegenden Erfindung liegt das Problem zugrunde, den bekannten Mähdrescher derart auszugestalten und weiterzubilden, dass die Verteilgüte auf möglichst effiziente Weise optimiert wird.

Das genannte Problem wird bei einem Mähdrescher mit den Merkmalen des Oberbegriffs von Anspruch 1 durch die Merkmale des kennzeichnenden Teils von Anspruch 1 gelöst.

Wesentlich ist dabei die Erkenntnis, dass die Verteilgüte maßgeblich von der Häckselqualität abhängt und durch eine optimale Einstellung und Regelung der ohnehin vorhandenen Häckselvorrichtung des Mähdreschers auf einfache Weise beeinflusst werden kann. Die Häckselqualität kann dabei insbesondere gegenüber dem Energiebedarf der Häckselvorrichtung ausbalanciert werden, das heißt, um Energie zu sparen wird das Stroh in der Häckselvorrichtung nur soweit zerkleinert, wie nötig. Dabei kann der notwendige Zerkleinerungsgrad anhand eines vorgebbaren Priorisierungsparameters einstellbar sein, was im Folgenden weiter erläutert wird.

So wird vorschlagsgemäß die Verteilgüte des aus der Gutverteileinrichtung im rückwärtigen Bereich des Mähdreschers ausgetretenen Häckselgutstroms bzw. werden für die Verteilgüte charakteristische Parameter sensorisch erfasst, wobei entsprechende Sensordaten von einer Steuereinrichtung verarbeitet werden und dazu genutzt werden, bestimmte Einstellungen der Häckselvorrichtung vorzunehmen. Dabei wird die Position der mit den Häckselmessern der Messertrommel zusammenwirkenden Gegenmesser und/oder der Reibleistenanordnung in der Häckselvorrichtung jeweils an die ermittelte Verteilgüte angepasst. Bevorzugt kann die Anpassung der jeweiligen Position zusätzlich auch basierend auf Parametern erfolgen, die für die Qualität des der Häckselvorrichtung zugeführten Gutstroms, bei dem es sich um einen Teilstrom handelt, charakteristisch sind, wie der Feuchte, dem Reifegrad, dem Durchsatz des Ernteguts, das heißt Strohs, der Schichthöhe des Ernteguts bzw. Strohs im Einzugskanal etc., welche Parameter ebenfalls sensorisch erfasst werden können. In besonders bevorzugter Weise kann die Anpassung der jeweiligen Position wie gesagt auch von einer Strategievorgabe bzw. einem Priorisierungsparameter beeinflusst werden, die bzw. den eine Bedienperson (Fahrer) aus einer Gruppe umfassend mehrere verschiedene Priorisierungsmodi auswählen kann, welche in der Steuereinrichtung vorgegeben sind.

Die Gegenmesser, die in der Häckselvorrichtung beweglich gelagert und beispielsweise auf einem beweglichen Messerträger angeordnet sind, können zu den genannten Anpassungszwecken mehr oder weniger in den Strömungskanal gestellt oder vollständig aus dem Strömungskanal herausbewegt werden. Die Bewegung kann eine Schwenkbewegung und/oder translatorische Bewegung der Gegenmesser und/oder des Messerträgers sein. Bei der Reibleistenanordnung, die zumindest eine Reibleiste und einen der Reibleistenanordnung in Gutflussrichtung vorgelagerten Reibboden umfasst, wird insbesondere der Reibboden und nicht die Reibleiste bewegt. Der Reibboden bildet insbesondere ein Leitblech am äußeren Umfang des Strömungskanals, so dass die Reibleiste mehr oder weniger dem Gutstrom ausgesetzt werden kann oder der Gutstrom vollständig an der Reibleiste vorbeigeleitet werden kann. Die Bewegung des Reibbodens ist insbesondere eine Schwenkbewegung und/oder translatorische Bewegung.

Die besagte Ansteuerung der Häckselvorrichtung, durch die die Gegenmesser und/oder die Reibleistenanordnung eingestellt wird bzw. werden, hat unmittelbaren Einfluss auf den aus dem Mähdrescher austretenden Häckselgutstrom und entsprechend auch auf die Verteilgüte. Ist das aus der Häckselvorrichtung austretende Erntegut, also die Häcksel, eher kurzstückig, verteilt sich dieses beispielsweise flacher auf dem Boden hinter dem Mähdrescher, wodurch dieses auch besser mit Mikroorganismen im Boden in Kontakt kommt. Auch hat eher kurzstückiges Erntegut eine andere Flugbahn nach dem Austritt aus der Gutverteileinrichtung, was unter anderem die Breite der auf dem Boden abgelegten Materialbahn, das heißt des Gutstrangs, und/oder deren Dichte (Abdeckungsgrad) beeinflussen kann. Durch Anpassen der Position der Gegenmesser und/oder der Reibleistenanordnung lässt sich auch der Auffaserungsgrad der Häcksel erhöhen, was eine Zersetzung des auf dem Boden verteilten Materials durch Mikroorganismen begünstigt.

Diesen positiven Aspekten eines durch Anpassen der Position der Gegenmesser und/oder der Reibleistenanordnung beeinflussten Gutstroms steht ein sich entsprechend erhöhender Energiebedarf der Häckselvorrichtung gegenüber. Der Energiebedarf erhöht sich, je mehr das Erntegut zerkleinert bzw. aufgefasert wird. Auch eine erhöhte Feuchte und/oder Schichthöhe des zu häckselnden Ernteguts kann den Energiebedarf erhöhen. Da es auch wünschenswert ist, den Energiebedarf der Arbeitsaggregate eines Mähdreschers, insbesondere auch den Energiebedarf der Häckselvorrichtung, möglichst gering zu halten, kann durch das vorschlagsgemäße Vorsehen der beschriebenen Verstellmöglichkeiten auch der Energiebedarf der Häckselvorrichtung, insbesondere automatisch, gesteuert werden. Insbesondere ist es auf diese Weise möglich, den Zerkleinerungsgrad der Häckselvorrichtung und entsprechend den Energiebedarf, insbesondere automatisch, dann zu verringern, wenn die Sensoreinrichtung eine relativ gute Verteilgüte feststellt. Nur in dem Fall, dass sich die Verteilgüte und ggf. Erntegutqualität während des Ernteprozesses verschlechtert, wird der Zerkleinerungsgrad in der Häckselvorrichtung durch Bewegen der Gegenmesser in den Strömungskanal bzw. in die Häckseltrommel und/oder durch Freigeben der Reibleiste durch Zurückklappen des Reibbodens erhöht, wodurch die Häckselvorrichtung entsprechend mehr Energie verbraucht. Mit dem vorschlagsgemäßen Mähdrescher lässt sich also auch der Energiehaushalt optimieren, wobei das Erntegut vorteilhafterweise nur soweit zerkleinert wird wie nötig.

Gemäß der Ausgestaltung des Mähdreschers nach Anspruch 2 regelt die Steuereinrichtung die Position der Reibleistenanordnung und/oder der Gegenmesser auf die Zielvorgabe eines minimalen Energiebedarfs der Häckselvorrichtung und die Zielvorgabe einer vorbestimmten Mindest-Häckselqualität. Dadurch wird immer eine bestimmte Häckselqualität gewährleistet, aber nicht mehr Energie verbraucht als nötig.

Vorzugsweise ist ein Priorisierungsparameter vorgesehen, der eine Priorisierung zwischen der Zielvorgabe eines minimalen Energiebedarfs der Häckselvorrichtung und der Zielvorgabe einer maximalen Häckselqualität repräsentiert, wobei die Steuereinrichtung die Anpassung der Position der Reibleistenanordnung und/oder der Gegenmesser gemäß dem Priorisierungsparameter vornimmt (Anspruch 3). Es ist also eine Wichtung zwischen Häckselqualität einerseits und Energiebedarf andererseits vorgesehen (Balancierung der Häckselqualität gegenüber dem Energiebedarf).

Gemäß der Ausgestaltung des Mähdreschers nach Anspruch 4 weist die Steuereinrichtung eine Ein-/Ausgabeeinheit auf, also eine Einheit die Eingaben bzw. Einstellungen einer Bedienperson zulässt und/oder einer Bedienperson Informationen anzeigen kann, wobei der Priorisierungsparameter über die Ein-/Ausgabeeinheit gestuft oder stufenlos einstellbar ist. Die Ein-/Ausgabeeinheit stellt vorzugsweise ein virtuelles Bedienelement bereit, insbesondere ein Drag&Drop-Bedienelement, das über die Ein-/Ausgabeeinheit anzeigbar ist und über das der Priorisierungsparameter einstellbar ist (Anspruch 5). Besonders bevorzugt handelt es sich bei dem Bedienelement um einen virtuellen Schieberegler.

Insbesondere kann die Sensoreinrichtung als einen die Verteilgüte des aus dem Mähdrescher ausgetretenen Häckselgutstroms beeinflussenden Parameter die Breite des von dem ausgetretenen Erntegut gebildeten Gutstrangs, die Höhe des Gutstrangs, die Dichte und/oder den Bodenabdeckungsgrad des Gutstrangs, die Menge des ausgetretenen Ernteguts, den Auffaserungsgrad der Häcksel im ausgetretenen Erntegut und/oder die Häcksellänge im ausgetretenen Erntegut ermitteln. Mit dem Gutstrang ist hier das auf dem Boden liegende, gehäckselte Erntegut gemeint, das zuvor als erster Teilstrom der Häckselvorrichtung zugeführt und nach dem Häckseln als Häckselgutstrom von der Gutverteileinrichtung ausgeworfen worden ist.

Die Ansprüche 6 und 7 definieren bevorzugte Abläufe, die die Steuereinrichtung bei entgegengesetzten Priorisierungen bewirken kann. So kann die Steuereinrichtung bei einer Priorisierung auf maximale Häckselqualität auf einen von der Sensoreinrichtung erfassten Anstieg der Häcksellänge die Gegenmesser auf die Häckselmesser zustellen und/oder die Position der Reibleistenanordnung so steuern, dass die Reibleistenanordnung verstärkt mit dem Teilstrom wechselwirkt. Dagegen kann bei einer Priorisierung auf minimalen Energiebedarf die Steuereinrichtung unabhängig von den Sensordaten der Sensoreinrichtung die Gegenmesser von den Häckselmessern entfernen und die Position der Reibleistenanordnung so steuern, dass die Reibleistenanordnung reduziert oder nicht mit dem Teilstrom wechselwirkt.

Gemäß der Ausgestaltung des Mähdreschers nach Anspruch 8 weist die Sensoreinrichtung einen Erfassungsbereich auf, der auf das auf dem Boden liegende, ausgetretene Erntegut bzw. den Gutstrang hinter dem Mähdrescher gerichtet ist, und/oder, der auf das sich im Flug befindliche, ausgetretene Erntegut gerichtet ist.

Zusätzlich zu der vorangehend erwähnten Sensoreinrichtung, die die Verteilgüte überwacht, kann auch eine weitere Sensoreinrichtung vorgesehen sein, die die Qualität des zu häckselnden Teilstroms bzw. Strohs darin sensorisch überwacht (Anspruch 9). Insbesondere kann die weitere Sensoreinrichtung gemäß Anspruch 10 als einen die Qualität des zu häckselnden Teilstroms beeinflussenden bzw. charakterisierenden Parameter den Reifegrad, die Feuchte und/oder die Fruchtart des Ernteguts ermitteln. Weiter ist es möglich, den Strohdurchsatz und/oder die Schichthöhe des zu häckselnden Strohs an mindestens einer Stelle innerhalb des Mähdreschers, insbesondere im Einzugskanal des Mähdreschers, oder an mindestens einem Arbeitsaggregat des Mähdreschers zu ermitteln.

Bei einer Priorisierung auf maximale Häckselqualität kann vorgesehen sein, dass die Steuereinrichtung auf einen von der weiteren Sensoreinrichtung erfassten Anstieg der Feuchte des Ernteguts die Gegenmesser auf die Häckselmesser zustellt und/oder die Position der Reibleistenanordnung so steuert, dass die Reibleistenanordnung verstärkt mit dem zu häckselnden Gutstrom bzw. Teilstrom wechselwirkt (Anspruch 11). So führt eine zunehmende Feuchte des Ernteguts zu einer unerwünschten Vergrößerung der Häcksellänge, was durch die vorschlagsgemäßen Verstellungmöglichkeiten kompensiert werden kann.

Anspruch 12 beschreibt vorteilhafte Ausgestaltungen des oder der Sensoren der jeweiligen Sensoreinrichtung. Insbesondere kann es sich dabei um eine Bilderfassungseinrichtung und/oder einen Feuchtigkeitssensor handeln.

Im Folgenden wird die Erfindung anhand einer lediglich ein Ausführungsbeispiel darstellenden Zeichnung näher erläutert. In der Zeichnung zeigt
- Fig. 1: einen Mähdrescher gemäß der vorliegenden Erfindung während des Durchfahrens eines Feldbestands,
- Fig. 2: eine Detailansicht eines hinteren Teils des Mähdreschers mit einer Häckselvorrichtung und einer Gutverteileinrichtung und
- Fig. 3: eine schematische Ansicht einer Ein-/Ausgabeeinheit des Mähdreschers.

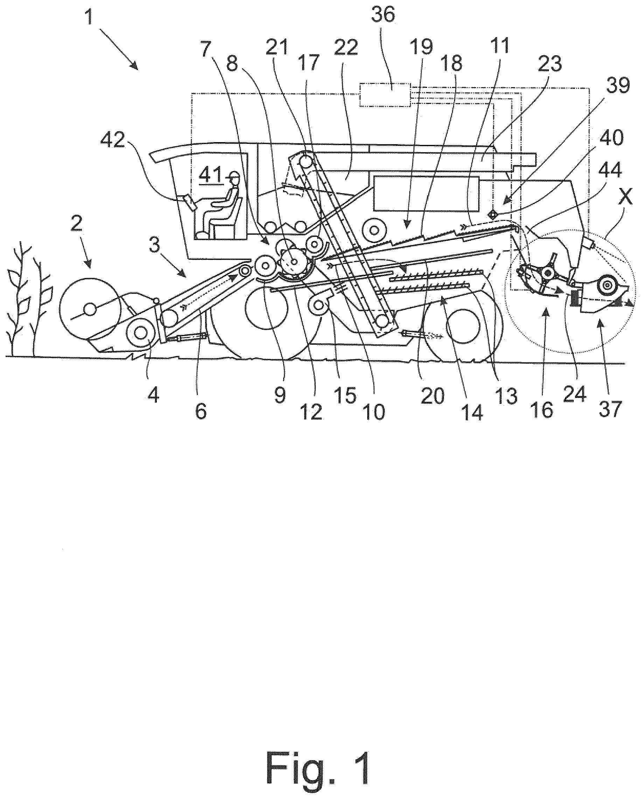

Der in Fig. 1 schematisch dargestellte Mähdrescher nimmt in seinem frontseitigen Bereich ein als Getreideschneidwerk 2 ausgeführtes Vorsatzgerät auf, welches in an sich bekannter Weise mit einem Schrägförderer 3 verbunden ist. Das Querförderorgan 4 des Schneidwerkes 2 übergibt von diesem aufgenommenes Erntegut 5 an den Schrägförderer 3, wobei dieser das Erntegut 5 mittels umlaufendem Förderer 6 in seinem oberseitigen rückwärtigen Bereich an das Dreschwerk 7 übergibt. In dem ein- oder mehrtrommelig ausgeführten Dreschwerk 7 wird das Erntegut 5 zwischen den Dreschtrommeln 8 und einem diese wenigstens teilweise ummantelnden Dreschkorb 9 hindurchgeführt und in zumindest zwei Teilströme 10, 11 getrennt. Der erste Teilstrom 10 besteht im Wesentlichen aus Körnern, Kurzstroh und Spreu und wird über einen Vorbereitungsboden 12 unmittelbar einer aus verschiedenen Siebebenen 13 bestehenden Reinigungseinrichtung 14 zugeführt. Die Reinigungseinrichtung 14 nimmt zudem eine Gebläseeinheit 15 auf, die einen die Siebebenen 13 durchsetzenden Luftstrom generiert.

Der im rückwärtigen Bereich des Dreschwerks 7 aus diesem austretende weitere, im Wesentlichen aus Stroh und ggf. einem Restkornanteil bestehende zweite Teilstrom 11 wird mittels einer Strohleittrommel 17 auf ein als Hordenschüttler 18 ausgeführtes Abscheideorgan 19 geleitet. Durch die oszillierende Bewegung des Hordenschüttlers 18 wird ein großer Anteil der in der Strohschicht enthaltenen Körner auf dem Hordenschüttler 18 abgeschieden und über einen sogenannten Rücklaufboden 20 und den Vorbereitungsboden 12 an die Reinigungseinrichtung 14 übergeben. Das Abscheideorgan 19 kann in bekannter Weise auch als Axialabscheidevorrichtung mit einem oder mehreren Abscheiderotoren ausgeführt sein.

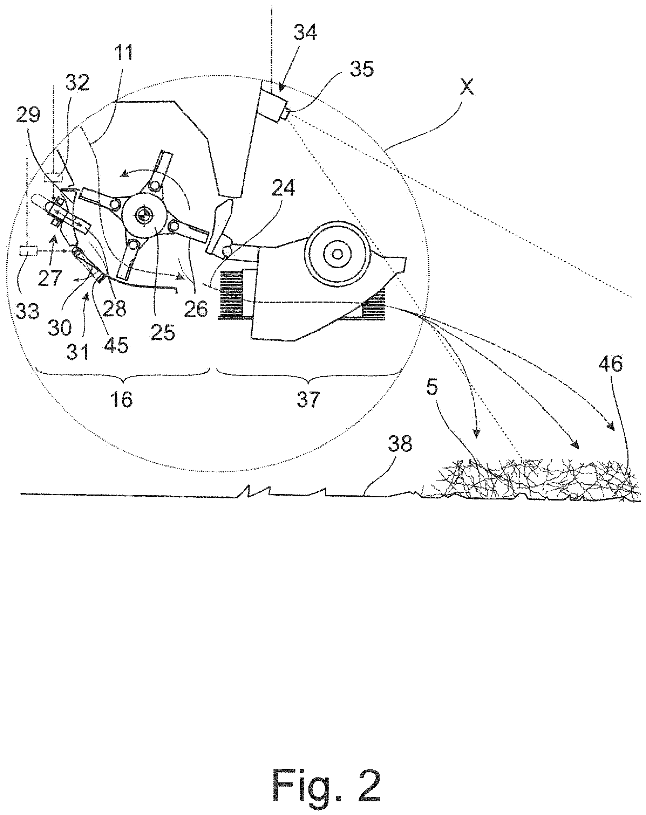

In der Reinigungseinrichtung 14 wird schließlich aus den in sie eingeleiteten verschiedenen Gutströmen 10, 11 ein gereinigter Körnerstrom mittels Förderelevatoren 21 in einen Korntank 22 gefördert und dort zwischengespeichert. Die Entleerung des Korntanks 22 erfolgt in der Regel mittels eines Korntankentleerförderers 23. Durch die oszillierende Bewegung der Schüttlerhorden wird das von den Dreschorganen 7 an den Hordenschüttler 18 übergebene Erntegut 5 auf diesem in Form einer Aneinanderreihung von Wurfbewegungen gefördert und schließlich im rückwärtigen Bereich des Hordenschüttlers 18 als im Wesentlichen nur Stroh enthaltender Teilstrom 11 in Richtung einer nachgelagerten Häckselvorrichtung 16 abgegeben. Die Weiterbehandlung des Teilstroms 11 wird nachfolgend anhand der Fig. 2 beschrieben.

Die Darstellung in Fig. 2 zeigt eine schematische Detailansicht X der Häckselvorrichtung 16. Die Häckselvorrichtung 16 umfasst eine Messertrommel 25 mit daran angeordneten Messern 26 in Form von Schlegelmessern sowie einen Messerträger 27, auf dem Gegenmesser 28 angeordnet sind, die mit den Schlegelmessern 26 auf der Messertrommel 25 abschnittsweise in Eingriff bringbar sind, einen sich abschnittsweise in Umfangsrichtung der Messertrommel 25 erstreckenden, separaten Bodenabschnitt 29 mit sich abschnittsweise in Umfangsrichtung erstreckenden Schlitzen in seiner Oberfläche, hinter dem der Messerträger 27 mit den Gegenmessern 28 angeordnet ist, die durch die Schlitze hindurchtreten können, einen Reibboden 30 sowie eine sich in Umfangsrichtung gesehen an den Reibboden 30 anschließende Reibleiste 45. Dem Messerträger 27 und dem Reibboden 30 ist jeweils eine Aktorik 32, 33 zugeordnet, um diese unabhängig voneinander werkzeuglos verstellen zu können.

Wie der Darstellung in Fig. 2 zu entnehmen ist, erstrecken sich der Bodenabschnitt 29, der Reibboden 30 sowie die Reibleiste 45 im Wesentlichen koaxial zur Rotationsachse der Messertrommel 25. Diese Elemente der Häckselvorrichtung 16 dienen der Führung des Teilstroms 11 und der Beeinflussung des Häckselvorgangs während der Bearbeitung des von dem Hordenschüttler 18 abgegebenen Strohs durch die Häckselvorrichtung 16. Um den Häckselvorgang und damit die Verteilgüte des im rückwärtigen Bereich des Mähdreschers 1 austretenden Häckselgutstroms 24, das heißt des gehäckselten Ernteguts bzw. Strohs 5, zu beeinflussen, können unterschiedliche Maßnahmen ergriffen werden, wie nachstehend ausgeführt wird.

Abhängig von Sensordaten, die von einer Sensoreinrichtung 34 generiert werden und die auf einer von mindestens einem Sensor 35 der Sensoreinrichtung 34 erfassten Verteilgüte bzw. mindestens einem die Verteilgüte beeinflussenden oder charakterisierenden Parameter basieren, bewirkt eine Steuereinrichtung 36 die Einstellung einer bestimmten Position der Gegenmesser 28 und/oder der Reibleistenanordnung 31. Beispielsweise kann das Schneiden des Strohs im Gutstrom 11 im freien Schnitt erfolgen, das heißt ohne eine Unterstützung durch die Gegenmesser 28. Die Gegenmesser 28 sind dann in einer zurückgezogenen Position angeordnet. Dabei sind die Gegenmesser 28 außer Eingriff mit den Schlegelmessern 26 bringbar, indem der hinter dem Bodenabschnitt 29 angeordnete Messerträger 27 soweit von der Messertrommel 25 weg bewegbar, hier translatorisch verschiebbar, ist, dass sich die Gegenmesser 28 gegenüber der Oberfläche des Bodenabschnitts 29 vollständig zurückgezogen haben (gestrichelt dargestellt). Diese Position des Messerträgers 27 führt im Ergebnis zu einer vergleichsweise großen Häcksellänge. Die Gegenmesser 28 können mittels des Messerträgers 27 aber auch in eine maximal vorstehende Position gebracht werden (mit durchgezogener Linie dargestellt). In dieser Position wird die Häcksellänge signifikant kürzer. Darüber hinaus sind Zwischenpositionen zwischen der zurückgezogenen Position und der maximal vorstehenden Position einstellbar, in denen die Gegenmesser 28 ebenfalls in einer vorstehenden Position angeordnet sind und unterschiedlich weit gegenüber der Oberfläche des Bodenabschnittes 29 vorstehen, was zu unterschiedlichen Häcksellängen führt.

Weiterhin lässt sich die Häcksellänge durch ein Verschwenken des Reibbodens 30 beeinflussen. Das maximale Verschwenken des Reibbodens 30 auf die Messertrommel 25 zu bringt die Reibleiste 45 in eine vom Reibboden 30 in Gutflussrichtung verdeckte Position (mit durchgezogener Linie dargestellt), was in einer größeren Häcksellänge resultiert, wohingegen das Verschwenken des Reibbodens 30 von der Messertrommel 25 weg die Reibleiste 45 in eine von ggf. mehreren vorstehenden Positionen bringt (gestrichelt dargestellt), was in einer kleineren Häcksellänge resultiert. Auch der Auffaserungsgrad des Strohs im ausgeworfenen Häckselgutstrom 24 lässt sich auf diese Weise verändern. Durch das Verschwenken wird die Reibleiste 45, die in Gutflussrichtung gesehen dem Reibboden 30 nachgeordnet ist, in unterschiedlichem Maß mit dem Teilstrom 11 in Eingriff gebracht. Je größer die Beabstandung des Reibbodens 30 in radialer Richtung zur Messertrommel 25, desto größer ist der Einfluss, den die Reibleiste 45 auf den Teilstrom 11 ausüben kann, mit dem die Reibleiste 45 zunehmend in Eingriff bringbar ist. Auch bei der Verstellung des Reibbodens 30 können verschiedene Positionen, die verschiedenen vorstehenden Positionen der Reibleiste 45 entsprechen, einstellbar sein, um unterschiedliche Häcksellängen realisieren zu können, indem die Reibleiste 45 in unterschiedlichem Maße mit dem Teilstrom 11 in Eingriff bringbar ist.

Nach Durchlaufen der Häckselvorrichtung 16 wird der zerkleinerte Gutstrom, das heißt der Häckselgutstrom 24, über eine Gutverteileinrichtung 37 im rückwärtigen Bereich des Mähdreschers 1 ausgeworfen und auf dem Boden 38 verteilt. Die Verteilgüte des aus dem Mähdrescher 1 ausgetretenen Häckselgutstroms 24 wird während des Erntevorgangs von der Sensoreinrichtung 34 und dem Sensor 35 überwacht und anhand von Verteilgüteparametern erfasst. Deutet sich eine Verschlechterung der Verteilgüte bedingt durch eine beispielsweise inhomogene Verteilung des Häckselgutstroms 24 auf dem Boden 38 an, wird dies von dem Sensor 35 ermittelt und die Sensoreinrichtung 34 generiert entsprechende Sensordaten. Die Sensordaten werden an die Steuereinrichtung 36 übertragen, die daraufhin als Gegenmaßnahme den Messerträger 27 bzw. die Gegenmesser 28 und/oder den Reibboden 30 derart verstellt, dass sich die Häcksellänge, wie zuvor beschrieben, verkürzt. Dadurch erhöht sich gleichzeitig der Energiebedarf der Häckselvorrichtung 16. Verbessert sich dagegen die Verteilgüte des aus dem Mähdrescher 1 ausgetretenen Häckselgutstroms 24, wird dies ebenfalls von dem Sensor 35 erkannt und von der Sensoreinrichtung 34 werden entsprechende Sensordaten an die Steuereinrichtung 36 übertragen, die daraufhin den Messerträger 27 bzw. die Gegenmesser 28 und/oder den Reibboden 30 in entgegengesetzter Richtung verstellt, derart, dass sich die Häcksellänge wieder vergrößert. Dementsprechend verringert sich auch wieder der Energiebedarf der Häckselvorrichtung 16. Die Steuereinrichtung 36 kann dadurch also die Position der Reibleistenanordnung 31 und/oder der Gegenmesser 28 auf die Zielvorgabe eines minimalen Energiebedarfs der Häckselvorrichtung 16 und die Zielvorgabe einer vorbestimmten Mindest-Häckselqualität, insbesondere unter Berücksichtigung einer Mindest-Häcksellänge, regeln.

Der Sensor 35, der hier eine Bilderfassungseinrichtung aufweist und als Kamera ausgebildet ist, ist konfiguriert, als einen die Verteilgüte beeinflussenden Parameter die Breite des von dem ausgetretenen Erntegut 5 bzw. Häckselgutstrom 24 gebildeten Gutstrangs 46, die Höhe bzw. Dicke des Gutstrangs 46, die Dichte bzw. den Bodenabdeckungsgrad des Gutstrangs 46, die Menge bzw. die Masse und/oder das Volumen pro Flächeneinheit des Gutstrangs 46, den Auffaserungsgrad der Häcksel im ausgetretenen Erntegut 5 und/oder die Häcksellänge im ausgetretenen Erntegut 5 zu erfassen. Grundsätzlich können auch mehrere Sensoren 35 vorgesehen sein, die insbesondere unterschiedliche der genannten Parameter erfassen.

Zusätzlich zu dem vorangehend beschriebenen Einstellprozess basierend auf einer erfassten Verteilgüte entsprechenden Sensordaten ist es außerdem denkbar, eine weitere Sensoreinrichtung 39 mit mindestens einem weiteren Sensor 40 vorzusehen, wobei die weitere Sensoreinrichtung 39 Parameter bzw. Eigenschaften erfasst, die den der Häckselvorrichtung 16 zugeführten Teilstrom 11 und/oder den daraus austretenden Häckselgutstrom 24 beeinflussen bzw. charakterisieren, um daraus auf die Qualität des Teilstroms 11 bzw. des diesen bildenden Strohs zu schließen. Die entsprechend generierten Sensordaten, die die weitere Sensoreinrichtung 29 ebenfalls an die Steuereinrichtung 36 überträgt, können durch die Steuereinrichtung 36 ebenfalls bei der Einstellung der Relativpositionen der Gegenmesser 28 und/oder der Reibleistenanordnung 31 gemäß dem vorangehend erläuterten Prinzip berücksichtigt werden. Beispielsweise kann der mindestens eine weitere Sensor 40 konfiguriert sein, als einen die Qualität des Teilstroms 11 charakterisierenden Parameter den Feuchtegehalt des Ernteguts bzw. Strohs 5, insbesondere mittels eines Feuchtigkeitssensors, und/oder Reifegrad und/oder Fruchtart, insbesondere mittels einer Bilderfassungseinrichtung, zu ermitteln. Auch ist es denkbar, dass als ein Betriebsparameter des Mähdreschers 1 der Erntegutdurchsatz und/oder die Schichthöhe des Ernteguts 5 an mindestens einer Stelle innerhalb des Mähdreschers 1, insbesondere im Einzugskanal des Mähdreschers 1, oder an mindestens einem Arbeitsaggregat erfasst wird.

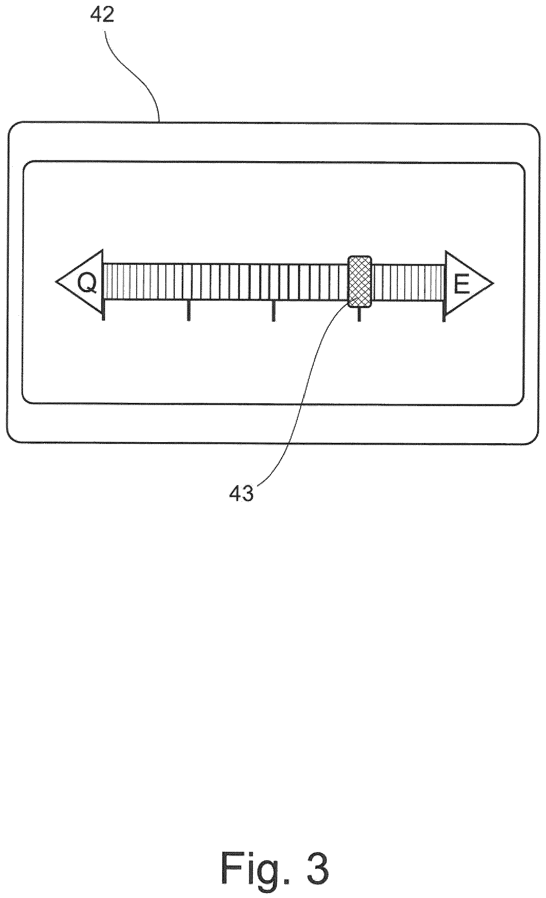

Fig. 3 zeigt schließlich schematisch, dass die Steuereinrichtung 36 vorzugsweise derart konfiguriert ist, dass eine Bedienperson zwischen verschiedenen Fahrstrategien (Priorisierungen) in Form von vorgegebenen Priorisierungsmodi, insbesondere Automatikmodi, wählen kann. Die Auswahl erfolgt dabei insbesondere über eine wie in Fig. 3 gezeigte, mit der Steuereinrichtung 36 verbundene Ein-/Ausgabeeinheit 42, die hier beispielhaft als Touchscreen ausgebildet ist. Ein Priorisierungsparameter ist über die Ein-/Ausgabeeinheit 42 gestuft oder stufenlos einstellbar. Dazu weist die Ein-/Ausgabeeinheit 42 ein virtuelles Bedienelement 43 auf, hier ein Drag&Drop-Bedienelement in Form eines virtuellen Schiebereglers.

Der einstellbare Priorisierungsparameter repräsentiert eine Priorisierung zwischen der Zielvorgabe eines minimalen Energiebedarfs der Häckselvorrichtung 16 und der Zielvorgabe einer maximalen Häckselqualität, wobei die Steuereinrichtung 36 die Anpassung der Position der Reibleistenanordnung 31 und/oder der Gegenmesser 28 gemäß dem Priorisierungsparameter auf die zuvor beschriebenen Art und Weise vornimmt.

Die verschiedenen über das virtuelle Bedienelement 43 einstellbaren Priorisierungsmodi stellen alle in unterschiedlichem Grad auf die Einhaltung einer optimalen Häckselqualität einerseits und auf einen energieeffizienten Betrieb der Häckselvorrichtung 16 und/oder des Mähdreschers 1 andererseits ab. Insbesondere ist es denkbar, dass in einem Fall mehr auf eine optimale Häckselqualität (in Fig. 3 der sich von der Skalenmitte nach links erstreckende Skalenbereich), in einem anderen Fall mehr auf einen energieeffizienten Betrieb (in Fig. 3 der sich von der Skalenmitte nach rechts erstreckende Skalenbereich) und/oder in noch einem anderen Fall auf eine neutrale Abstimmung (in Fig. 3 die Skalenmitte) abgestellt wird.

Beispielsweise sind die Fahrstrategien bzw. Priorisierungsmodi "sehr hohe Häckselqualität", "hohe Häckselqualität", "neutral", "geringer Energiebedarf' und "sehr geringer Energiebedarf" vorgegeben, unter denen die Bedienperson frei auswählen kann. Beispielhaft ist in Fig. 3 eine hauptsächlich, aber nicht vollständig auf einen energieeffizienten Betrieb abstellende Fahrstrategie eingestellt worden, hier die Fahrstrategie "geringer Energiebedarf'. Die Steuereinrichtung 36 ist hier und vorzugsweise derart konfiguriert ist, dass die auf den diversen Sensordaten basierende Einstellung der Position der Reibleistenanordnung 31 und/oder der Gegenmesser 28 in Abhängigkeit von dem gewählten Priorisierungsmodus erfolgt.

### Bezugszeichenliste

- 1: Mähdrescher
- 2: Getreideschneidwerk
- 3: Schrägförderer
- 4: Querförderorgan
- 5: Erntegut bzw. Stroh
- 6: Umlaufender Förderer
- 7: Dreschwerk
- 8: Dreschtrommeln
- 9: Dreschkorb
- 10: Erster Teilstrom
- 11: Zweiter Teilstrom
- 12: Vorbereitungsboden
- 13: Siebebenen
- 14: Reinigungseinrichtung
- 15: Gebläseeinheit
- 16: Häckselvorrichtung
- 17: Strohleittrommel
- 18: Hordenschüttler
- 19: Abscheideorgan
- 20: Rücklaufboden
- 21: Förderelevator
- 22: Korntank
- 23: Korntankentleerförderer
- 24: Häckselgutstrom
- 25: Messertrommel
- 26: Häckselmesser
- 27: Messerträger
- 28: Gegenmesser
- 29: Bodenabschnitt
- 30: Reibboden
- 31: Reibleistenanordnung
- 32: Aktorik für Messerträger
- 33: Aktorik für Reibboden
- 34: Sensoreinrichtung
- 35: Sensor
- 36: Steuereinrichtung
- 37: Gutverteileinrichtung
- 38: Boden
- 39: Weitere Sensoreinrichtung
- 40: Weiterer Sensor
- 41: Kabine
- 42: Ein-/Ausgabeeinheit
- 43: Virtuelles Bedienelement
- 44: Einzugskanal
- 45: Reibleiste
- 46: Gutstrang auf dem Boden

## Patentansprüche

1. Mähdrescher mit einer Häckselvorrichtung (16) konfiguriert zum Zerkleinern von Erntegut (5), die eine mit Häckselmessern (26) besetzte Messertrommel (25), einen mit Gegenmessern (28) besetzten Messerträger (27) und eine Reibleistenanordnung (31) aufweist, wobei die Gegenmesser (28) und/oder die Reibleistenanordnung (31) zumindest partiell in einen die Häckselvorrichtung (16) passierenden Teilstrom (11) bringbar ist bzw. sind, und mit einer Gutverteileinrichtung (37) konfiguriert zum Verteilen des aus dem Mähdrescher (1) austretenden Häckselgutstroms (24) auf dem Boden (38) im rückwärtigen Bereich des Mähdreschers (1), und mit einer Sensoreinrichtung (34) konfiguriert zur Generierung von Sensordaten, die mindestens einen die Verteilgüte des aus dem Mähdrescher (1) ausgetretenen Häckselgutstroms (24) beeinflussenden Parameter repräsentieren, wobei der Mähdrescher (1) eine Steuereinrichtung (36) aufweist, die eingerichtet ist, die Position der Reibleistenanordnung (31) und/oder der Gegenmesser (28) in Abhängigkeit von der Verteilgüte anzupassen, **dadurch gekennzeichnet, dass** die Sensoreinrichtung (34) einen Sensor (35) umfasst, der eine Bilderfassungseinrichtung aufweist und als Kamera ausgebildet ist, und konfiguriert ist, als einen die Verteilgüte beeinflussenden Parameter
- die Breite des von dem ausgetretenen Erntegut (5) bzw. Häckselgutstrom (24) gebildeten Gutstrangs (46), und/oder
- die Höhe bzw. Dicke des von dem ausgetretenen Erntegut bzw. Häckselgutstrom gebildeten Gutstrangs (46), und/oder
- die Dichte bzw. den Bodenabdeckungsgrad des von dem ausgetretenen Erntegut bzw. Häckselgutstrom gebildeten Gutstrangs (46), und/oder
- die Menge bzw. die Masse und/oder das Volumen pro Flächeneinheit des von dem ausgetretenen Erntegut bzw. Häckselgutstrom gebildeten Gutstrangs (46), und/oder
der Auffaserungsgrad der Häcksel im ausgetretenen Erntegut (5) und/oder die Häcksellänge im ausgetretenen Erntegut (5)
zu erfassen.

2. Mähdrescher nach Anspruch 1, **dadurch gekennzeichnet, dass** die Steuereinrichtung (36) die Position der Reibleistenanordnung (31) und/oder der Gegenmesser (28) auf die Zielvorgabe eines minimalen Energiebedarfs der Häckselvorrichtung (16) und die Zielvorgabe einer vorbestimmten Mindest-Häckselqualität regelt.

3. Mähdrescher nach Anspruch 1 oder 2, **dadurch gekennzeichnet, dass** ein Priorisierungsparameter vorgesehen ist, der eine Priorisierung zwischen der Zielvorgabe eines minimalen Energiebedarfs der Häckselvorrichtung (16) und der Zielvorgabe einer maximalen Häckselqualität repräsentiert, und dass die Steuereinrichtung (36) die Anpassung der Position der Reibleistenanordnung (31) und/oder der Gegenmesser (28) gemäß dem Priorisierungsparameter vornimmt.

4. Mähdrescher nach Anspruch 3, **dadurch gekennzeichnet, dass** die Steuereinrichtung (36) eine Ein-/Ausgabeeinheit (42) aufweist und dass der Priorisierungsparameter über die Ein-/Ausgabeeinheit (42) gestuft oder stufenlos einstellbar ist.

5. Mähdrescher nach Anspruch 4, **dadurch gekennzeichnet, dass** die Ein-/Ausgabeeinheit (42) ein virtuelles Bedienelement (43), insbesondere ein Drag&Drop-Bedienelement, bereitstellt, das über die Ein-/Ausgabeeinheit (42) anzeigbar ist und über das der Priorisierungsparameter einstellbar ist.

6. Mähdrescher nach Anspruch 3 und ggf. nach einem der Ansprüche 4 bis 5, **dadurch gekennzeichnet, dass** dann, wenn der Priorisierungsparameter so gewählt ist, dass eine Priorisierung auf maximale Häckselqualität erfolgt, die Steuereinrichtung (36) auf einen von der Sensoreinrichtung (34) erfassten Anstieg der Häcksellänge die Gegenmesser (28) auf die Häckselmesser (26) zustellt und/oder die Position der Reibleistenanordnung (31) so steuert, dass die Reibleistenanordnung (31) verstärkt mit dem Teilstrom (11) wechselwirkt.

7. Mähdrescher nach Anspruch 3 und ggf. nach einem der Ansprüche 4 bis 6, **dadurch gekennzeichnet, dass** dann, wenn der Priorisierungsparameter so gewählt ist, dass eine Priorisierung auf minimalen Energiebedarf erfolgt, die Steuereinrichtung (36) unabhängig von den Sensordaten der Sensoreinrichtung (34) die Gegenmesser (28) von den Häckselmessern (26) entfernt und die Position der Reibleistenanordnung (31) so steuert, dass die Reibleistenanordnung (31) reduziert oder nicht mit dem Teilstrom (11) wechselwirkt.

8. Mähdrescher nach einem der vorhergehenden Ansprüche, **dadurch gekennzeichnet, dass** die Sensoreinrichtung (34) einen Erfassungsbereich aufweist, der auf das auf dem Boden (38) liegende, ausgetretene Erntegut (5) gerichtet ist, und/oder, der auf das sich im Flug befindliche, ausgetretene Erntegut (5) gerichtet ist.

9. Mähdrescher nach einem der vorhergehenden Ansprüche, **dadurch gekennzeichnet, dass** eine weitere Sensoreinrichtung (39) vorgesehen ist, die Sensordaten generiert, die mindestens einen die Qualität des der Häckselvorrichtung (16) zugeführten Teilstroms (11) beeinflussenden Parameter repräsentieren.

10. Mähdrescher nach Anspruch 9, **dadurch gekennzeichnet, dass** die weitere Sensoreinrichtung (39) als einen die Qualität des Teilstroms (11) beeinflussenden Parameter den Reifegrad, die Feuchte, die Fruchtart, den Durchsatz und/oder die Schichthöhe des Ernteguts (5) in einem Einzugskanal (44) des Mähdreschers (1) ermittelt.

11. Mähdrescher nach Anspruch 10, **dadurch gekennzeichnet, dass** bei einer Priorisierung auf maximale Häckselqualität die Steuereinrichtung (36) auf einen von der Sensoreinrichtung (39) erfassten Anstieg der Feuchte des Ernteguts (5) die Gegenmesser (28) auf die Häckselmesser (26) zustellt und/oder die Position der Reibleistenanordnung (31) so steuert, dass die Reibleistenanordnung (31) verstärkt mit dem Teilstrom (11) wechselwirkt.

12. Mähdrescher nach einem der vorhergehenden Ansprüche, **dadurch gekennzeichnet, dass** die Sensoreinrichtung (34) und/oder die weitere Sensoreinrichtung (39) als Sensor (35, 40) einen Feuchtigkeitssensor aufweist.

## Claims

1. A combine harvester having a chopping device (16) configured for comminuting harvested material (5), which has a knife drum (25) fitted with chopping knives (26), a knife carrier (27) fitted with stationary knives (28), and a rasp bar assembly (31), wherein the stationary knives (28) and/or the rasp bar assembly (31) can be at least partially moved into a partial stream (11) traversing the chopping device (16), and having a material spreading unit (37) configured for spreading the stream of chopped material (24) discharged from the combine harvester (1) on the ground (38) in a rear region of the combine harvester (1), and having a sensor unit (34) configured for generating sensor data which represent at least one parameter influencing the quality of spreading of the stream of chopped material (24) discharged from the combine harvester (1),
wherein the combine harvester (1) has a control unit (36) which is configured for adapting the position of the rasp bar assembly (31) and/or the stationary knives (28) as a function of the quality of spreading, **characterized in that** the sensor unit (34) comprises a sensor (35) which has an image acquisition unit and is constructed as a camera and is configured to detect, as a parameter influencing the spreading quality:
- the width of the line of material (46) formed by the discharged harvested material (5) or stream of chopped material (24),
and/or
- the height or thickness of the line of material (46) formed by the discharged harvested material or stream of chopped material, and/or
- the density or the amount of ground covered by the line of material (46) formed by the discharged harvested material or stream of chopped material, and/or
- the quantity or the mass and/or the volume per unit area of the line of material (46) formed by the discharged harvested material or stream of chopped material, and/or
- the degree of fibrillation of the chopped material in the discharged harvested material (5), and/or the length of the chopped material in the discharged harvested material (5).

2. The combine harvester according to claim 1, **characterized in that** the control unit (36) regulates the position of the rasp bar assembly (31) and/or the stationary knives (28) according to the target objective of a minimum energy requirement for the chopping device (16) and according to the target objective of a predetermined minimum chopping quality.

3. The combine harvester according to claim 1 or claim 2, **characterized in that** a prioritization parameter is provided which represents a prioritization between the target objective of a minimum energy requirement for the chopping device (16) and the target objective of a maximum chopping quality, and **in that** the control unit (36) carries out the adaptation of the position of the rasp bar assembly (31) and/or of the stationary knives (28) in accordance with the prioritization parameter.

4. The combine harvester according to claim 3, **characterized in that** the control unit (36) has an input/output unit (42) and **in that** the prioritization parameter can be adjusted in a stepped or continuous manner by means of the input/output unit (42).

5. The combine harvester according to claim 4, **characterized in that** the input/output unit (42) provides a virtual control element (43), in particular a drag and drop control element, which can be displayed by means of the input/output unit (42) and by means of which the prioritization parameter can be adjusted.

6. The combine harvester according to claim 3 and, optionally, according to one of claims 4 to 5, **characterized in that** when the prioritization parameter is selected so as to prioritize maximum chopping quality, the control unit (36) advances the stationary knives (28) towards the chopping knives (26) in response to an increase in the length of cut detected by the sensor unit (34), and/or controls the position of the rasp bar assembly (31) so that the rasp bar assembly (31) interacts more strongly with the partial stream (11).

7. The combine harvester according to claim 3 and, optionally, according to one of claims 4 to 6, **characterized in that** when the prioritization parameter is selected so as to prioritize a minimum energy requirement, independently of the sensor data from the sensor unit (34), the control unit (34) moves the stationary knives (28) away from the chopping knives (26) and controls the position of the rasp bar assembly (31) so that the rasp bar assembly (31) interacts in a reduced manner or does not interact with the partial stream (11).

8. The combine harvester according to one of the preceding claims, **characterized in that** the sensor unit (34) has a capture area which is directed over the discharged harvested material (5) lying on the ground (38) and/or which is directed over the discharged harvested material (5) which is in flight.

9. The combine harvester according to one of the preceding claims, **characterized in that** a further sensor unit (39) is provided which generates sensor data which represent at least one parameter influencing the quality of the partial stream (11) fed to the chopping device (16).

10. The combine harvester according to claim 9, **characterized in that** the further sensor unit (39) determines, as a parameter influencing the quality of the partial stream (11), the degree of ripeness, the moisture content, the type of crop, the throughput and/or the volume of the harvested material (5) in a feeder housing (44) of the combine harvester (1).

11. The combine harvester according to claim 10, **characterized in that** when a maximum chopping quality is prioritized, in response to an increase in moisture content of the harvested material (5) detected by the sensor unit (39), the control unit (36) advances the stationary knives (28) towards the chopping knives (26) and/or controls the position of the rasp bar assembly (31) so that the rasp bar assembly (31) interacts more strongly with the partial stream (11).

12. The combine harvester according to one of the preceding claims, **characterized in that** the sensor unit (34) and/or the further sensor unit (39) has a moisture sensor as the sensor (35, 40).

## Revendications

1. Moissonneuse-batteuse comprenant un dispositif de hachage (16) configuré pour broyer du produit récolté (5), lequel comporte un tambour porte-couteaux (25) garni de couteaux hacheurs (26), un porte-couteaux (27) garni de contre-couteaux (28) et un agencement de battes de friction (31), les contre-couteaux (28) et/ou l'agencement de battes de friction (31) pouvant être amenés, respectivement amené au moins partiellement dans un flux partiel (11) traversant le dispositif de hachage (16), et comprenant un équipement d'épandage de produit (37) configuré pour épandre le flux de produit haché (24) sortant de la moissonneuse-batteuse (1) sur le sol (38) dans la zone arrière de la moissonneuse-batteuse (1), et comprenant un agencement de capteur (34) configuré pour générer des données de capteur qui représentent au moins un paramètre influençant la qualité d'épandage du flux de produit haché (24) sortant de la moissonneuse-batteuse (1), la moissonneuse-batteuse (1) comportant un agencement de commande (36) qui est agencé pour adapter la position de l'agencement de battes de friction (31) et/ou des contre-couteaux (28) en fonction de la qualité d'épandage, **caractérisée en ce que** l'agencement de capteur (34) inclut un capteur (35) qui comporte un dispositif d'enregistrement d'images et est conformé en caméra et est configuré pour détecter comme paramètre influençant la qualité d'épandage
- la largeur de la bande de produit (46) formée par le produit récolté (5), respectivement flux de produit haché (24), sortant et/ou
- la hauteur, respectivement l'épaisseur de la bande de produit (46) formée par le produit récolté, respectivement flux de produit haché, sortant, et/ou
- l'épaisseur, respectivement le degré de recouvrement de sol de la bande de produit (46) formée par le produit récolté, respectivement flux de produit haché, sortant,
- la quantité, la masse et/ou le volume par unité de surface de la bande de produit (46) formée par le produit récolté, respectivement flux de produit haché, sortant, et/ou
le degré de défibrage de la paille hachée dans le produit récolté sortant (5) et/ou la longueur de hachage dans le produit récolté sortant (5).

2. Moissonneuse-batteuse selon la revendication 1, **caractérisée en ce que** l'agencement de commande (36) régule la position de l'agencement de battes de friction (31) et/ou des contre-couteaux (28) en fonction de l'objectif d'un besoin énergétique minimal du dispositif de hachage (16) et de l'objectif d'une qualité de hachage minimale prédéterminée.

3. Moissonneuse-batteuse selon la revendication 1 ou 2, **caractérisée en ce qu'**il est prévu un paramètre de priorisation qui représente une priorisation entre l'objectif d'un besoin énergétique minimal du dispositif de hachage (16) et l'objectif d'une qualité de hachage maximale, et **en ce que** l'agencement de commande (36) effectue l'adaptation de la position de l'agencement de battes de friction (31) et/ou des contre-couteaux (28) conformément au paramètre de priorisation.

4. Moissonneuse-batteuse selon la revendication 3, **caractérisée en ce que** l'agencement de commande (36) comporte une unité d'entrée/sortie (42), et **en ce que** le paramètre de priorisation est réglable de façon graduelle ou continue par l'intermédiaire de l'unité d'entrée/sortie (42).

5. Moissonneuse-batteuse selon la revendication 4, **caractérisée en ce que** l'unité d'entrée/sortie (42) fournit un élément d'utilisation virtuel (43), en particulier un élément d'utilisation par glisser-déposer, qui est affichable par l'intermédiaire de l'unité d'entrée/sortie (42) et par l'intermédiaire duquel le paramètre de priorisation est réglable.

6. Moissonneuse-batteuse selon la revendication 3 et le cas échéant selon une des revendications 4 à 5, **caractérisée en ce que**, lorsque le paramètre de priorisation est choisi de façon à opérer une priorisation de la qualité de hachage maximale, l'agencement de commande (36), à la suite d'une augmentation de la longueur de hachage détectée par l'agencement de capteur (34), rapproche les contre-couteaux (28) des couteaux hacheurs (26) et/ou commande la position de l'agencement de battes de friction (31) de façon que l'agencement de battes de friction (31) interagisse de manière accrue avec le flux partiel (11).

7. Moissonneuse-batteuse selon la revendication 3 et le cas échéant selon une des revendications 4 à 6, **caractérisée en ce que**, lorsque le paramètre de priorisation est choisi de façon à opérer une priorisation d'un besoin énergétique minimal, l'agencement de commande (36), indépendamment des données de capteur de l'agencement de capteur (34), éloigne les contre-couteaux (28) des couteaux hacheurs (26) et commande la position de l'agencement de battes de friction (31) de façon que l'agencement de battes de friction (31) interagisse de manière réduite ou nulle avec le flux partiel (11).

8. Moissonneuse-batteuse selon une des revendications précédentes, **caractérisée en ce que** l'agencement de capteur (34) comporte une zone de détection qui est dirigée vers le produit récolté sortant (5) couché sur le sol (38) et/ou qui est dirigée vers le produit récolté sortant (5) se trouvant en l'air.

9. Moissonneuse-batteuse selon une des revendications précédentes, **caractérisée en ce qu'**il est prévu un agencement de capteur supplémentaire (39) qui génère des données de capteur qui représentent au moins un paramètre influençant la qualité du flux partiel (11) amené au dispositif de hachage (16).

10. Moissonneuse-batteuse selon la revendication 9, **caractérisée en ce que** l'agencement de capteur supplémentaire (39) détermine, comme paramètre influençant la qualité du flux partiel (11), le degré de maturité, l'humidité, le type de culture, le débit et/ou la hauteur de couche du produit récolté (5) dans un canal d'alimentation (44) de la moissonneuse-batteuse (1).

11. Moissonneuse-batteuse selon la revendication 10, **caractérisée en ce que**, en cas de priorisation de la qualité de hachage maximale, l'agencement de commande (36), à la suite d'une augmentation de l'humidité du produit récolté (5) détectée par l'agencement de capteur (39), rapproche les contre-couteaux (28) des couteaux hacheurs (26) et/ou commande la position de l'agencement de battes de friction (31) de façon que l'agencement de battes de friction (31) interagisse de manière accrue avec le flux partiel (11).

12. Moissonneuse-batteuse selon une des revendications précédentes, **caractérisée en ce que** l'agencement de capteur (34) et/ou l'agencement de capteur supplémentaire (39) comportent comme capteur (35, 40) un capteur d'humidité.
